# EUROPEAN PATENT SPECIFICATION

(11) **EP 3 113 909 B1**
(45) Date of publication and mention of the grant of the patent: **02.02.2022**
(21) Application number: 14816077.3
(22) Date of filing: 08.12.2014
(51) Int. Cl.: B25C 1/08

(54) **INTERFACE FOR FUEL DELIVERY SYSTEM FOR COMBUSTION FASTENER DRIVER**
SCHNITTSTELLE FÜR EIN TREIBSTOFFZUFUHRSYSTEM FÜR EINEN VERBRENNUNGSEINTREIBER
INTERFACE POUR SYSTÈME DE DISTRIBUTION DE COMBUSTIBLE POUR CLOUEUSE À COMBUSTION

(30) Priority: 03.03.2014 US 201414195338
(43) Date of publication of application: 11.01.2017
(73) Proprietor: Illinois Tool Works Inc., Glenview, IL 60025 (US)
(72) Inventor: VANSTAAN, Valery H., Glenview, Illinois 60025 (US); SHEA, Maureen Louise, Glenview, Illinois 60025 (US); LARGO, Marc, Glenview, Illinois 60025 (US)
(74) Representative: HGF
(86) International application number: PCT/US2014/069111
(87) International publication number: WO 2015/134076

(56) References cited:
- US-A1- 2011 248 063
- US-A1- 2012 267 417

## Description

### RELATED APPLICATION

This application is a Continuation-in-Part of US Patent Application Serial No. 13/271,995 filed October 12, 2011, which is a Continuation-in-Part of US Patent Application Serial No. 12/759,340 filed April 13, 2010, now US Patent No. 8,302,831.

### BACKGROUND

The present invention relates generally to improvements in fuel cell fuel delivery arrangements for use in combustion tools, and more specifically to adapters provided to combustion tool fuel cells for obtaining more consistent fuel dosing.

In the present application the term "combustion nailer" refers to combustion powered fastener driving tools, also known as fastener drivers, combustion tools, cordless framing tools, cordless trim tools and the like. More particularly, the present invention relates to improvements in the delivery of fuel from fuel cells customarily provided for such purposes.

Such tools typically have a housing substantially enclosing a combustion power source, a fuel cell, a battery, a trigger mechanism and a magazine storing a supply of fasteners for sequential driving. The power source includes a reciprocating driver blade which separates a forward most fastener from the magazine and drives it through a nosepiece into the workpiece. Exemplary tools are described in US Patent Nos. 4,483,473; 4,522,162; 6,145,724; and 6,679,414. Such fastener-driving tools and such fuel cells are available commercially from ITW-Paslode (a division of Illinois Tool Works, Inc.) of Vernon Hills, Ill., under its IMPULSE trademark.

As exemplified in Nikolich U.S. Pat. Nos. 4,403,722; 4,483,474; and 5,115,944, it is known to use a dispenser such as a fuel cell to dispense a hydrocarbon fuel to a combustion tool. A design criterion of such fuel cells is that only a desired amount of fuel or dose of fuel should be emitted by the fuel cell for each combustion event. The amount of fuel should be carefully monitored to provide the desired combustion, yet in a fuel-efficient manner to prolong the working life of the fuel cell.

Prior attempts to address this dosage factor have resulted in fuel metering valves located in the tool (U.S. Pat. No. 5,263,439) or attached to the fuel cell (U.S. Pat. No. 6,302,297). Fuel cells have been introduced having internal metering valves, as disclosed in U.S. Patent No. 7,392,922. Other combustion tool fuel delivery arrangements are disclosed in US 7,478,740; 7,571,841; 7,591,249; 7,654,429; and 7,661,568

Regardless of the location of the metering valve, the associated combustion nailer is designed to exert a force on the valve, either the reciprocating valve stem or on the valve body itself, to cause the stem to retract against a biasing force in the metering valve to dispense a measured dose of fuel. It is important for fuel economy in the fuel cell, and for desired operation of the combustion nailer, that only the designated amount of fuel to be supplied to the tool on a dosage basis.

Designers of such tools are focused on maintaining a sealed relationship in the fuel delivery system for more efficiently using fuel in the fuel cells, and in particular when the tool is used at relatively cooler ambient temperatures (below about 50°F, 10°C). Another drawback of conventional systems is that when the fuel cell stem is provided with an adapter extension, in some cases the fuel cell stem is exposed to external accidental contacts. Such external accidental contacts may unintentionally dispense fuel, or damage or even break the fuel stem, leaving the fuel cell unusable.

Another factor faced by designers of such tools relates to an inherent aspect of manufactured plastic parts, known as tolerance buildup. Components need to be designed to accommodate a range of dimensions for various components to account for manufacturing tolerances. In the present operational environment, the engagement between the fuel cell valve stem and the corresponding fuel delivery components and passages of the tool needs to be maintained in a positive, fluid communicative relationship, while both preventing leaks and also while accommodating such dimensional component variations. In addition, the fuel delivery system should also be designed to maintain the fuel flow in the face of severe impact forces generated in the combustion process. US 2012/267417 A1 discloses all the features of the preamble of the independent claims. A further fuel cell adapter and a further fuel delivery system are also disclosed in US 2011/248063 A1.

### SUMMARY

To more accurately maintain the relationship between the fuel cell metering valve stem and the corresponding actuation mechanism on the tool, the current fuel system includes two elements: a fuel cell stem receiver block connected to the tool combustion chamber and also directly in contact with the fuel cell stem, and a fuel cell adapter which securely engages an upper peripheral ring of the fuel cell. A direct connection between the stem receiver block and the fuel cell stem reduces the chances for fuel leakage and also reduces the number of components of the fuel delivery system, since a separate fuel stem adapter is no longer needed.

Further, a vertically projecting, generally tubular cowl-like collar projects vertically from an upper surface of the fuel cell adapter and protects the fuel cell stem from accidental contact which might damage the stem's sealing surface, or more seriously, may damage the stem itself. Another advantage of the collar is that it cooperates with, and accommodates reciprocal movement of the stem receiver block in defining a vertical stroke track for the guiding the block during the fuel dispensing process. Unlike previous stem receiver blocks made of plastic, the present block is made of metal, preferably aluminum or zinc, which, when properly configured, has been found to enhance tool performance at lower temperatures, and also enhances the sealing relationship between the block and the fuel cell stem.

It has been found that the metal stem receiver block allows for increased vaporization/reduced condensation of the fuel. This is important at lower ambient temperatures when flexible fuel transport apparatus are used. In the case of conventional plastic stem receiver blocks, the plastic typically has low thermal conductivity and a relatively low thermal mass. If enough fuel is allowed to vaporize in the stem receiver block, the block can present a cold zone. If the cold zone becomes too cold, fuel flow is limited, inhibiting tool performance.

Another feature of the present system is that the fuel cell has a fuel cell adapter with a relatively large diameter flange. The flange engages arms on the cylinder head, and thus the fuel cell is suspended from the cylinder head, rather than resting on a floor in the fuel cell chamber of the tool housing. This suspension of the fuel cell results in a more consistent relationship between the fuel cell and the corresponding tool actuator mechanism.

Still another feature of the present system is that the adapter is provided with a flexible suspension for supporting the collar on the fuel cell adapter. In one embodiment, this flexible suspension is integrally formed with the adapter, and permits a relatively small, designated amount of vertical travel of the collar, while resisting or inhibiting pivoting, lateral or other non-vertical movement of the collar. By permitting limited vertical movement of the collar, the present fuel cell adapter enhances the engagement between the stem receiver block and the fuel cell valve stem. In one embodiment, the range of vertical motion is approximately no more than 0.51 mm (0.020 inch).

This enhanced engagement reduces leaks and promotes a full cyclical depression of the valve stem, so that fuel dosing is more consistent. It has been found that prior art systems restricted the stroke of the valve stem, or in some cases, activated the stem at inappropriate times.

More specifically, a fuel delivery system is provided for use with a combustion nailer including a cylinder head frame, a fuel cell chamber and a combustion chamber. The delivery system includes a fuel cell with an outer shell having a closed lower end and an open upper end, a closure crimped over the upper end and defining an opening for accommodating a reciprocating valve stem, a fuel cell adapter frictionally engaging the closure and including a flange configured for suspending the fuel cell in the fuel cell chamber. A stem receiver block is connectable to the cylinder head frame and includes a stem engagement portion configured for directly and sealingly engaging an end of the valve stem, the stem engagement portion being in fluid communication with an internal receiver passage constructed and arranged for delivering fuel to the combustion chamber.

In another embodiment, a fuel delivery system is provided for use with a combustion nailer including a cylinder head frame, the system includes a fuel cell with an outer shell having a closed lower end and an open upper end, a closure crimped over the upper end and defining an opening for accommodating a reciprocating valve stem, a fuel cell adapter frictionally engaging the closure and including a flange configured for suspending the fuel cell in a tool fuel cell chamber. The adapter includes a collar configured for receiving the valve stem and being suspended for restricted vertical movement relative to the flange. A stem receiver block is connectable to the cylinder head frame and includes a stem engagement portion configured for directly and sealingly engaging an end of the valve stem, the stem engagement portion being in fluid communication with an internal receiver passage constructed and arranged for delivering fuel to a combustion chamber.

In yet another embodiment, a fuel cell adapter is provided for use with a fuel cell in conjunction with a combustion nailer having a cylinder head frame. The adapter includes a generally planar flange defining a main opening, a collar suspended in the opening by a suspension connected to the collar and to a ring in the flange defining the opening. The suspension including a plurality of support arms each connected at one end to the collar and at an opposite end to the ring such that the collar is connected to the flange only by the suspension.

### BRIEF DESCRIPTION OF THE DRAWINGS

FIG. 1 is a front perspective view of a combustion tool equipped with the present fuel delivery system;
FIG. 2 is a fragmentary top perspective view of the tool of FIG. 1 showing an upper end of the fuel cell chamber open and ready for accommodating a fuel cell;
FIG. 3 is a fragmentary vertical section of the tool of FIG. 1 showing the present fuel delivery system;
FIG. 4 is a fragmentary bottom perspective view of a fuel cell shown suspended from the cylinder head frame;
FIG. 5 is a top perspective view of a fuel cell equipped with the present fuel cell adapter;
FIG. 6 is an enlarged fragmentary vertical section of the system of FIG. 3;
FIG. 7 is a top perspective view of an alternate embodiment of the fuel cell and adapter of FIG. 5;
FIG. 8 is a front elevation of the fuel cell of FIG. 7;
FIG. 9 is a vertical cross-section taken along the line 9-9 of FIG. 8 and in the direction generally indicated;
FIG. 10 is a top perspective view of the adapter of FIG. 7;
FIG. 11 is a bottom perspective view of the adapter of FIG. 10;
FIG. 12 is an overhead plan view of the adapter of FIG. 10;
FIG. 13 is a front elevation of the adapter of FIG. 12;
FIG. 14 is a cross-section taken along the line 14-14 of FIG. 13 and in the direction generally indicated;
FIG. 15 is a fragmentary vertical section of a nailer equipped with the fuel cell of FIG. 7 in the rest position; and
FIG. 16 is a fragmentary vertical section of the nailer of FIG. 14 shown in the fuel dispensing position.

### DETAILED DESCRIPTION

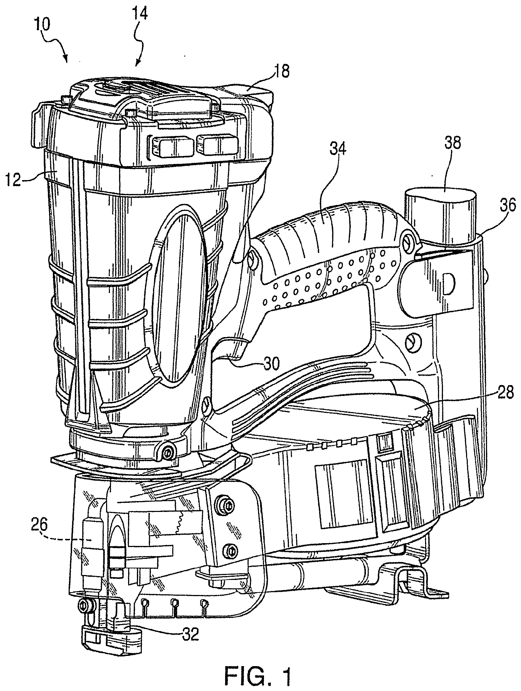

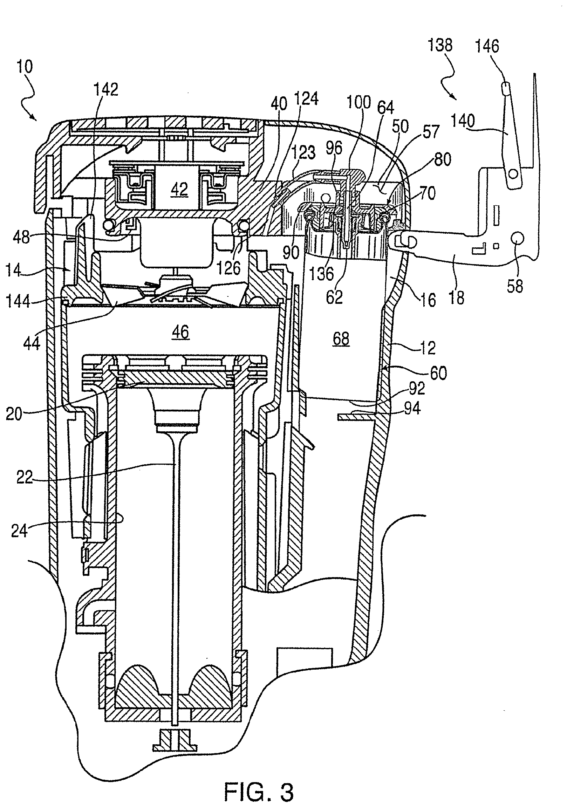

Referring now to FIGS. 1-3, a combustion nailer is depicted, generally designated 10. As is known in the art, a main tool housing 12 encloses a power source or engine 14 (FIG. 3) and a fuel cell chamber 16. A fuel cell door 18 is pivotally engaged on the housing 12 and is configured to close off the fuel cell chamber 16 during tool operation. The construction and arrangement of such doors 18 is well known in the art.

The power source 14 includes a reciprocating piston 20 (FIG. 3) having a driver blade 22 secured thereto for common movement relative to the power source and within a cylinder 24. A nosepiece 26 (FIG. 1) is secured to a lower end of the power source 14 as is known in the art and provides an attachment point for a fastener magazine 28, here shown as a coil magazine, however other types of magazines such as strip magazines are considered suitable. Fasteners are fed sequentially from the magazine 28 into the nosepiece 26 where they are engaged by the driver blade 22 traveling down a fastener passageway in the nosepiece.

The fasteners are driven into a workpiece or substrate after initiation of a power cycle, initiated in some tools by the operator actuating a trigger 30. A workpiece contact element 32 reciprocates relative to the nosepiece 26 to control tool functions as is known in the art, but is not relevant to the present discussion.

Also provided to the housing 12 is a handle 34 which serves as the mounting point for the trigger 30. A battery chamber 36 (FIG. 1) is also provided to the housing 12 for accommodating at least one battery 38 for powering electronic tool functions such as spark generation, cooling fan operation, electronic fuel injection and/or tool condition sensing as known in the art. The location of the battery chamber 36 may vary depending on the particular nailer configuration.

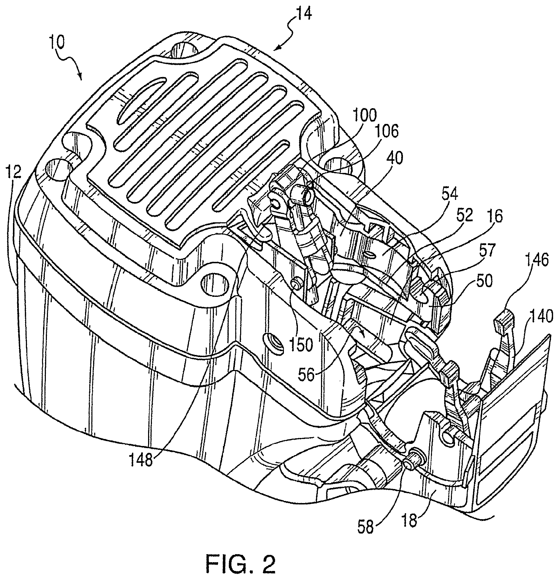

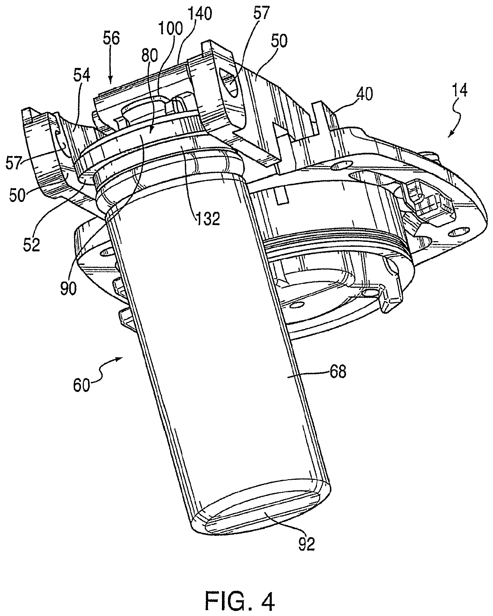

Referring now to FIGs. 2-4, an upper end of the power source 14 is defined by a cylinder head 40, serving as the mounting point for a fan motor 42 powering a fan 44 projecting into a combustion chamber 46, and also being the mounting point for a spark generator or spark plug 48. Also included on the cylinder head 40 are two spaced, parallel arms 50 included as part of a cylinder head frame, each having a recessed shelf 52 defined on an inner surface 54 (FIG. 2). A space 56 between the inner surfaces 54 defines an entrance to the fuel cell chamber 16. The entrance 56 is considered part of the fuel cell chamber 16. Ends of the arms 50 have pivot openings 57 for receiving corresponding lugs 58 of the fuel cell door 18.

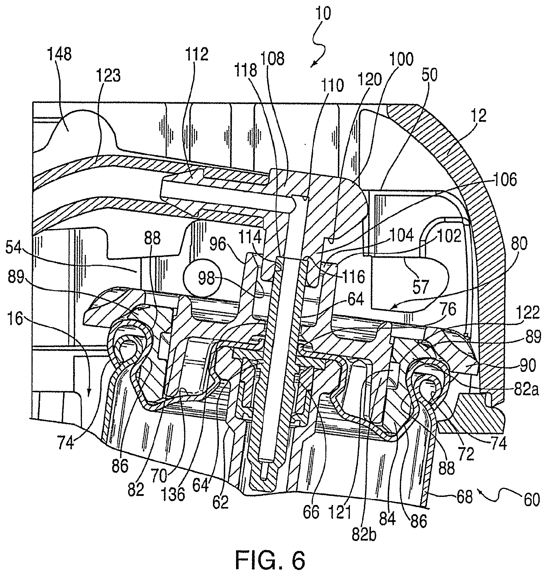

Referring now to FIGs. 3-6, as described in U.S. Pat. No. 5,263,439, inserted into the fuel cell chamber 16 is a fuel cell, generally designated 60, the general construction of which is well known in the art pertaining to combustion tools, and which is configured for removable engagement in the fuel cell chamber 16. The particular construction of the present fuel cell 60, having an internal fuel metering valve 62 (FIGs. 3 and 6) is described in copending U.S. Patent No. 7,392,922. Generally speaking, a fuel valve stem 64 is biased to a closed position, as by a spring (not shown), but when axially depressed, a measured dose of fuel is dispensed. Upon withdrawal of the axial force, the stem 64 resumes its rest position, and a subsequent dose of fuel flows into a metering chamber 66 for the next firing cycle.

Other major components of the fuel cell 60 include a generally cylindrical, close bottomed outer shell 68, and a closure 70 crimped over an open upper end 72 of the shell. As a result of this crimping action, the closure 70 includes a peripheral annular ring 74. Included on the closure 70 is an opening 76 for accommodating the reciprocating valve stem 64.

Referring now to FIGs. 3-6, an important feature of the present fuel cell 60 is an adapter, generally designated 80. A main portion of the adapter 80 is the adapter body 82 including a depending ring 84 which is retained on the fuel cell 60 through engagement with the fuel cell closure 70. A tight friction fit of the adapter 80 with the closure 70 is achieved by at least one radially extending gripping formation 86 which tightly engages an interior surface of the peripheral closure ring 74. The gripping formation 86 defines an annular concave recess or groove 88 which accommodates an inner curved portion of the closure ring and preferably is dimensioned for a looser engagement on the closure ring 74 compared to the formation 86, to accommodate manufacturing variations. In addition, an upper end of the gripping formation 86 includes a radially extending lip 89 configured for engaging an upper surface of the closure ring 74. The depending ring 84 and the formation 86 can be provided in a single closed ring or a series of spaced protrusions.

To reduce the possibility of a user accidentally using a fuel cell not suitable for the present tool 10, the adapter 80 is designed to be extremely difficult to remove from the closure 70. This is accomplished by dimensioning the gripping formation 86 and the radially extending lip to have an extremely tight friction fit with the closure 70. In addition, in that the adapter 80 is preferably molded of a plastic material, a material is selected for stiffness, as well as for fuel resistance, moldability and durability. It is contemplated that acetyl, commonly sold under the trademark Celcon.RTM by Hoechst Celanese, Charlotte N.C., is a preferred material, however other acetyls, polyamids or other fuel resistant plastics may be suitable.

The other main portion of the adapter 80 is a generally planar, disk-shaped flange 90 that is configured for engaging the locating shelves 52 for suspending the fuel cell 60 in the fuel cell chamber 16. It will be seen that the generally planar flange 90 extends beyond an exterior of the fuel cell outer shell 68. In fact, the flange 90 is dimensioned so that once engaged in the locating shelves 52, it is the sole support for the fuel cell 60 in the fuel cell chamber 16. More specifically, once suspended on the shelves 52, a bottom 92 of the fuel cell 60 is disposed above and free of a floor 94 of the fuel cell chamber 16 (FIG. 3). While the particular engagement of the flange 90 on the shelves 52 is described here, it will be appreciated that the adapter 80 may be provided with alternate structures configured for suspending the fuel cell 60 from the cylinder head 40.

Preferably, the flange 90 has a vertically projecting collar 96. The collar is tubular in shape, defining an inner area 98 that surrounds the valve stem 64. Also, the collar 96 projects from the flange 90 a sufficient distance to protect the valve stem 64 from damage or impact. Another feature of the collar 96 is that it is dimensioned for slidingly accommodating reciprocal movement of a stem receiver block 100. More specifically, an upper end 102 of the collar 96, which extends above an uppermost point of the valve stem 64 when the stem is in its uppermost rest position, also defines an end of an inwardly tapering, annular internal chamfer area 104 that facilitates location of a depending stem engagement portion 106 of the stem receiver block 100 upon the valve stem.

Referring now to FIGs. 3 and 6, the stem receiver block 100 includes a block-like body 108 defining an internal fuel passage 110 connected at one end to the stem engagement portion 106, and at an opposite end to a fuel port 112, preferably taking the form of a barbed nozzle. Depending from the body 108, the stem engagement portion 106 defines a stem chamber 114 dimensioned to accommodate an upper end 116 of the stem 64. A counterbored stem stop 118 defines an annular flat or horizontal sealing surface for sealingly receiving the upper stem end 116. It has been found that the horizontal stem stop 118 provides a more positive seal with the upper stem end 116 than provided by conventional fuel cell engagement structures.

Another feature of the present stem receiver block 100 is that a shoulder 120 is defined where an underside of the body 108 meets an upper end of the stem engagement portion 106. This shoulder 120 impacts the upper end 102 of the collar 96 to limit the downward movement of the stem receiver block, and accordingly the valve stem 64. In other words, the shoulder 120 is positioned on the body 108 to define a lowermost point of the stroke of the stem receiver block 100 and the valve stem 64. Due to the construction of the internal metering valve 62, the downward travel of the stem receiver block 100 is sufficient to release a dose of fuel from the metering valve.

In one embodiment, the stem receiver block 100 is made of metal, and more preferably aluminum. It has been found that the aluminum is more resistant to flow variations and the resultant dosage variations over a wider range of ambient temperatures resulting in improved performance in lower temperature environments than conventional plastic stem receiver blocks.

It is contemplated that the adapter body 82 may be provided in two alternative configurations. In one, as shown in FIGs. 3, 5 and 6, the adapter body 82 has two main components: an outer portion 82a including the gripping formation 86, the groove 88 and the lip 89; and an inner portion 82b, which includes the collar 96 and the flange 90 and engages the outer portion by a screw-and-twist engagement, where lugs 121 on the inner portion 82b engage helical grooves 122 on the outer portion 82a. In the other configuration, the adapter body 82 is provided as a single, integral piece.

To complete the connection between the fuel cell valve stem 64 and the combustion chamber 46, a flexible hose or conduit 123 is matingly engaged on the end of the fuel port 112 at one end, and at an opposite end is matingly engaged on a cylinder head inlet fitting 124. Fluid communication between the inlet fitting 124 and the combustion chamber 46 is achieved by a fuel passage 126 in the cylinder head 40.

An advantage of the present adapter 80 is that the combination of the tight frictional engagement between the gripping formation 86 and the radially extending lip 89, the suspension of the fuel cell 60 in the tool using the flange 90 engaging the shelves 52, and the direct engagement of the stem receiver block 100 upon the fuel cell has been found to significantly improve fuel cell efficiency. More specifically, a more consistent fuel dosing is obtained, and performance in colder temperatures has been improved.

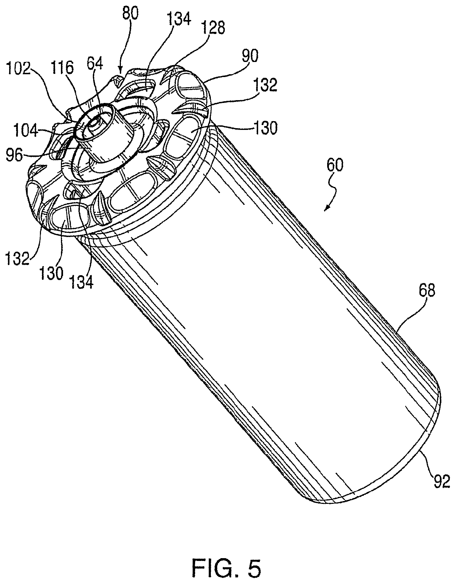

Referring now to FIG. 5, an upper surface 128 of the flange 90 is preferably provided with integrally formed depressions 130 and grooves 132 for enhancing gripping and handling by a user. This enhanced gripping is useful when the adapter 80 is provided in two portions 82a, 82b as described above. In addition, openings 134 are provided for facilitating molding. The specific shapes and dimensions of the depressions 130, the grooves 132 and the openings 134 may vary to suit the particular application, and in some cases may be optionally eliminated.

Referring again to FIGs. 3 and 6, another feature of the present adapter 80 is that the flange 90 defines a stem opening 136 for reciprocally and slidingly accommodating the valve stem 64. It is preferred that the stem opening 136 is dimensioned for defining a tight, sliding engagement with the valve stem such that there is minimal clearance between the opening and the valve stem outer surface. Such tight, sliding engagement reduces the chances for dirt to become lodged in the fuel cell metering valve 62. In addition, the relatively small diameter opening 136 prevents the adapter 80 from being used with incompatible fuel cells, which have larger diameter stems that will not fit through the opening 136. As is known in the art, there are different fuel cell fuel mixtures, and some mixtures are formulated for specific types of tools, and will be less effective if used with incompatible tools.

Referring now to FIGs. 2 and 3, as is known in the art, to dispense a dose of fuel from the fuel cell 60 through the flexible hose 122, a fuel cell actuator assembly is provided and is generally designated 138 which is in operational relationship with fuel cell chamber 16 and is constructed and arranged for exerting an axial force on the valve stem 64. A main component of the actuator 138 is a generally elongate actuator element 140 configured for exerting an axial force on the stem 64, releasing the dose of fuel. In one embodiment, the element 140 is associated with the fuel cell door 18 and is in actual contact with the stem receiver block 100.

As seen in FIGs. 2 and 3, the fuel cell door 18 is pivotally engaged with the pivot points 57 on the cylinder head arms 50. As is well known in the combustion tool art, vertical projections 142 on the reciprocating valve sleeve 144 (which largely defines the combustion chamber 46) engage ends 146 of the actuator element 140 and cause it to rock relative to the fuel cell door 18, thus exerting the periodic axial force on the stem receiver block 100, which in turn axially depresses the valve stem 64. Also shown in FIG. 2 is the pivoting nature of the stem receiver block 100, which is connected to a pivoting arm 148 connected to the cylinder head 40 at points 150. Once the tool 10 is pressed against a workpiece, the workpiece contact element 32 is retracted relative to the cylinder 24, ultimately causing the depression of the valve stem 64, releasing a dose of fuel into the combustion chamber 46 and a resulting combustion or firing of the tool 10.

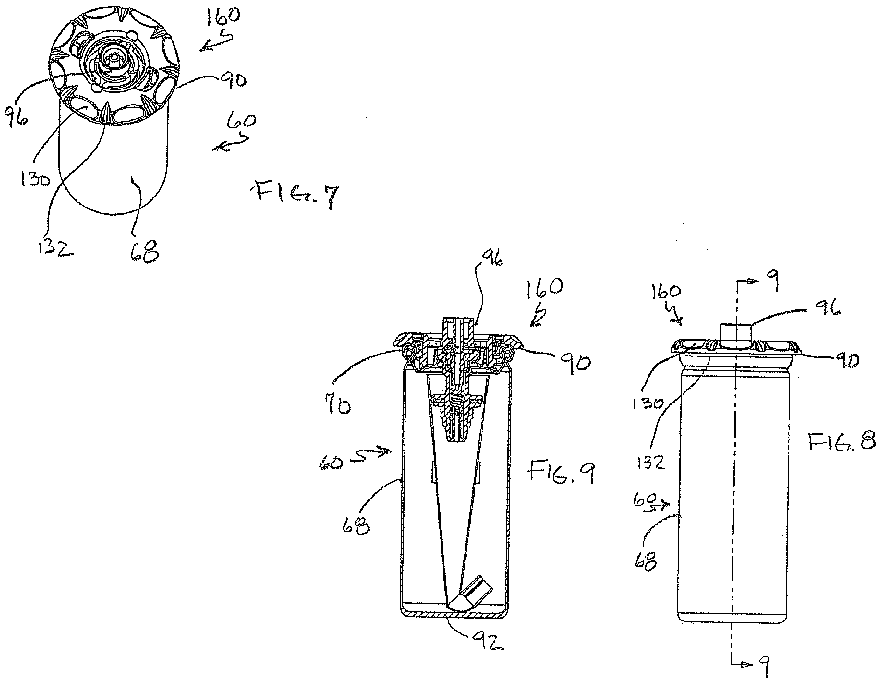

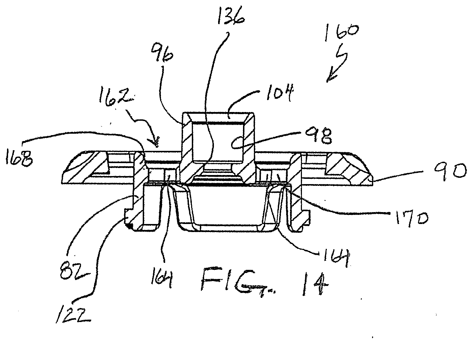

Referring now to FIGs. 7-14, an alternate embodiment of the adapter 80 is generally designated 160. Components of the adapter 160 shared with the adapter 80 are designated with identical reference numbers. A main difference between the adapters 80 and 160 is that the latter is provided with a flexible suspension for the collar 96. Instead of a solid connection rigidly supporting the collar 96 upon the flange 90, as seen in FIG. 5, the collar in the adapter 160 is suspended relative the flange 90. The suspension, generally designated 162, is defined by a plurality, and preferably four support arms 164, each connected at one end 166 to a ring 168 defined in the flange 90. The ring 168 defines a main opening 170. In one embodiment, the ring 168 projects generally vertically, or in the direction of the longitudinal axis of the fuel cell 60, relative to the flange 90. Other ring configurations are contemplated.

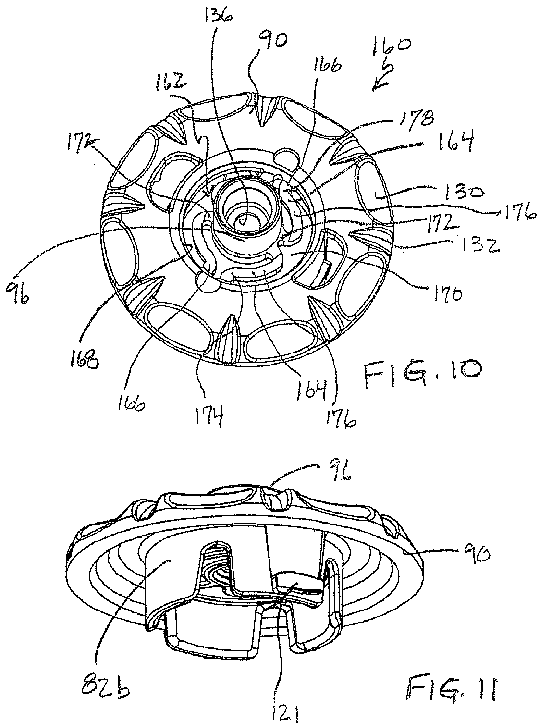

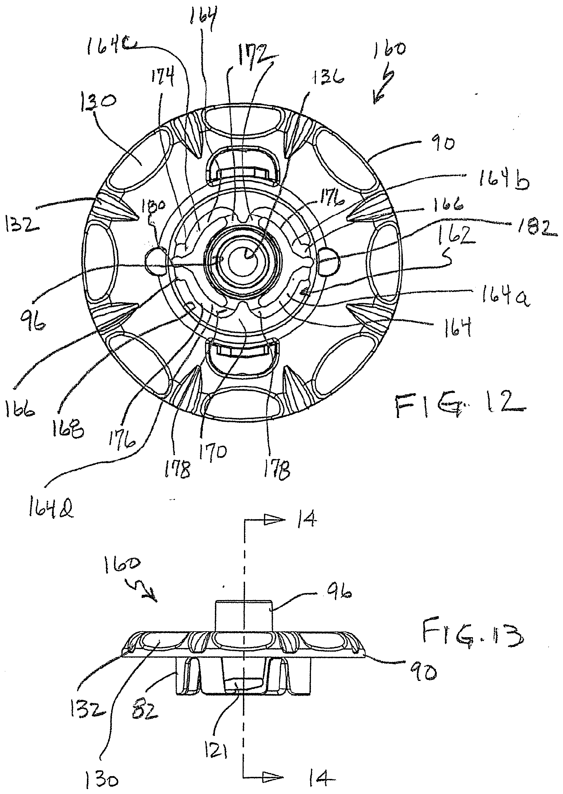

As best seen in FIGs. 10 and 12, the collar 96 is located generally centrally in the main opening 170, and is connected to the flange 90 only through the support arms 164, which are each connected to the collar at an end 172 opposite the end 166. The arms 164 are generally "S"-shaped, relatively stiff, and are constructed to permit the collar 96 only a limited vertical travel generally no more than 0.51 mm (0.020 inch) with small tolerances contemplated for this value. At the same time, the collar 96 is restricted to allow even less non-vertical movement, including pivoting, rotating or laterally relative to the orientation depicted in FIG. 13.

This relatively stiff suspension is achieved by the arms 164 having a generally rectangular vertical cross-section, and including three main portions: a first or ring portion 174 projecting generally parallel to a diameter of the opening 170; a second or mid portion 176 being gently arcuate and generally following a curve of the generally cylindrical perimeter of the collar 96 in spaced orientation; and a third or collar portion 178 curving abruptly from the mid portion and contacting the collar in a direction generally parallel to a diameter of the collar.

Referring now to FIG. 12, it will be seen that the ring portion 174 and the collar portion 178 are oriented at generally 90° from each other. Further, the arms 164 generally surround the collar 90, and the ring ends 166 of adjacent support arms 164a and 164b are closely adjacent each other, as are the ring ends 166 of adjacent support arms 164c and 164d. As a result, the collar 96 can be said to be suspended from mainly two, generally diametrically-opposed support points 180, 182. Also, the arms 164a, 164b are oriented to be mirror-images of arms 164c, 164d.

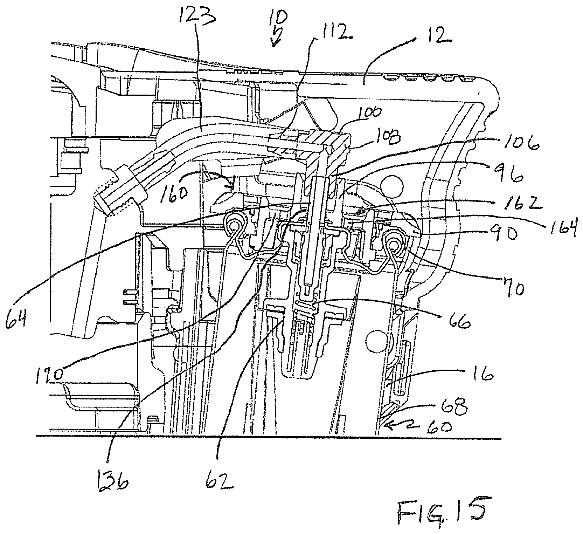

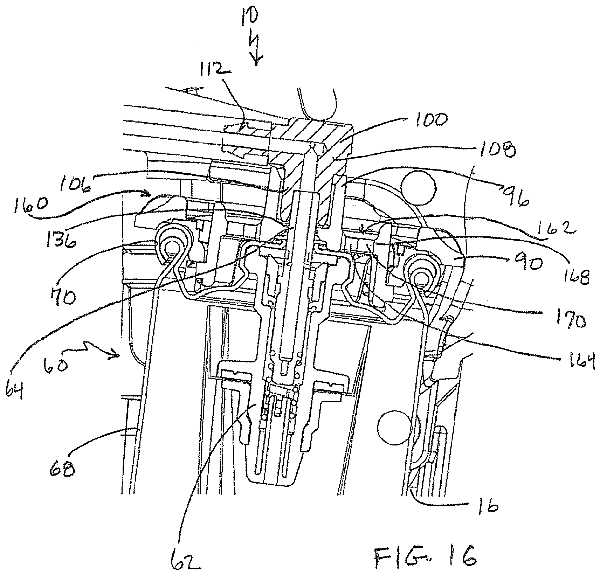

Referring now to FIGs. 15 and 16, it will be seen that the present adapter 160 promotes positive, sliding engagement between the stem receiver block 100 and the valve stem 64. It has been found that the relatively stiff suspension 162, featuring the design incorporating limited vertical movement of the collar 96 relative to the flange 90, and even further restricted non-vertical movement, improves the efficiency of the actuation of the valve stem 64 for obtaining more consistent fuel delivery.

## Claims

1. A fuel delivery system constructed and arranged for use with a combustion fastener driver (10) including a cylinder head frame, a combustion chamber (46) and a housing (12) defining a fuel cell chamber (16), said fuel delivery system comprising:
a fuel cell (60) with an outer shell (68) having a closed lower end (92) and an open upper end (72);
a closure (70) crimped over said upper end (72) and defining an opening (76) for accommodating a reciprocating valve stem (64);
a fuel cell adapter (160) frictionally engaging said closure (70) and including a flange (90) configured for suspending said fuel cell (60) in the fuel cell chamber (16), said adapter (160) including a collar (96) configured for receiving said valve stem (64); and
a stem receiver block (100) connectable to the cylinder head frame and including a stem engagement portion (106) configured for directly and sealingly engaging an end of said valve stem (64), said stem engagement portion (106) being in fluid communication with an internal receiver passage (110) constructed and arranged for delivering fuel to the combustion chamber (46),
**characterised in that** said collar (96) is suspended for restricted vertical movement relative to said flange (90).

2. The fuel delivery system of claim 1, wherein said stem receiver block (100) includes a body (108) defining said internal fuel passage (110), and said stem engagement portion (106) depends from said body and defines a stem chamber (114).

3. The fuel delivery system of claim 2, wherein said stem chamber (114) includes a stem stop (118) defining a generally horizontal surface configured for engaging an upper end (116) of the valve stem (64).

4. The fuel delivery system of claim 2, wherein said collar (96) is vertically projecting and dimensioned for slidingly accommodating reciprocal movement of said stem engagement portion (106) and configured for protecting said valve stem (64) against breakage.

5. The fuel delivery system of claim 1, wherein said flange (90) on said fuel cell adapter includes a main opening (136) in which said collar (96) is suspended, said collar being dimensioned for slidingly accommodating a stem engagement portion (106) of said stem receiver block (100), and for guiding said stem engagement portion as it engages said valve stem (64).

6. The fuel delivery system of claim 5, wherein said collar (96) is suspended relative to said flange (90) so that only limited vertical movement of 0.51 mm (0.020 inch) is permitted, and non-vertical movement of said collar is further restricted.

7. The fuel delivery system of claim 5, wherein said collar (96) is suspended relative to said flange (90) by a plurality of arms (164), each connected at one end (172) to said collar and to an opposite end (166) to a ring (168) on said flange defining said main opening (136).

8. The fuel delivery system of claim 7, wherein said plurality of arms (164):
- includes four arms constructed and arranged to generally surround said collar (96), or
- includes four arms suspended from two main support points (180, 182) on said ring (168) defining said main opening (136), or
- each include a ring portion (174), a mid portion (176) and a collar portion (178).

9. The fuel delivery system of claim 1, wherein said stem receiver block (100) is made of metal.

10. A fuel cell adapter (160) for use with a fuel cell (60) in conjunction with a combustion fastener driver (10) having a cylinder head frame, said adapter comprising:
a generally planar flange (90) and defining a main opening (136);
a collar (96) configured for receiving a reciprocating valve stem (64) **characterised in that** said collar (96) is suspended in said opening (136) by a suspension (162) connected to said collar and to a ring (168) in said flange (90) defining said opening,
said suspension (162) including a plurality of support arms (164) each connected at one end (172) to said collar (96) and at an opposite end (166) to said ring (168) such that said collar (96) is connected to said flange (90) only by said suspension (162)

11. The adapter of claim 10 wherein each said arm (164) is constructed to permit the collar (96) only a limited vertical travel of 0.51 mm (0.020 inch), and even more restricted non-vertical movement.

12. The adapter of claim 10 wherein said plurality of support arms (164) include four arms, each generally "S"-shaped, including a mid portion (174) generally arcuate and generally following a curve of a perimeter of said collar (96).

13. The adapter of claim 12, wherein said support arms (164) have ends (166) attached to said ring (168) such that two pairs of such arms each have said ends closely attached at said ring, so that said collar (96) is suspended in said opening (136) at two generally diametrically opposed support points (180, 182).

## Patentansprüche

1. Treibstoffzufuhrystem, das zur Verwendung mit einem Verbrennungseintreiber (10) konstruiert und angeordnet ist, der einen Zylinderkopfrahmen, eine Verbrennungskammer (46) und ein Gehäuse (12) beinhaltet, das eine Brennstoffzellenkammer (16) definiert, wobei das Treibstoffzufuhrsystem Folgendes aufweist:
eine Brennstoffzelle (60) mit einer äußeren Schale (68) mit einem geschlossenen unteren Ende (92) und einem offenen oberen Ende (72);
einen Verschluss (70), der über das obere Ende (72) gecrimpt ist und eine Öffnung (76) zum Aufnehmen eines hin- und hergehenden Ventilschafts (64) definiert;
einen Brennstoffzellenadapter (160), der mit dem Verschluss (70) reibschlüssig in Eingriff steht und einen Flansch (90) beinhaltet, der zum Aufhängen der Brennstoffzelle (60) in der Brennstoffzellenkammer (16) ausgestaltet ist, wobei der Adapter (160) einen Kragen (96) beinhaltet, der zum Aufnehmen des Ventilschafts (64) ausgestaltet ist; und
einen Schaftaufnahmeblock (100), der mit dem Zylinderkopfrahmen verbindbar ist und einen Schafteingriffsabschnitt (106) beinhaltet, der zum direkten und abdichtenden Eingriff mit einem Ende des Ventilschafts (64) ausgestaltet ist, wobei der Schafteingriffsabschnitt (106) in Fluidverbindung mit einem internen Aufnahmekanal (110) steht, der zum Zuführen von Treibstoff zu der Verbrennungskammer (46) konstruiert und angeordnet ist,
**dadurch gekennzeichnet, dass** der Kragen (96) für eine begrenzte vertikale Bewegung relativ zu dem Flansch (90) aufgehängt ist.

2. Treibstoffzufuhrsystem nach Anspruch 1, wobei der Schaftaufnahmeblock (100) einen Körper (108) beinhaltet, der den inneren Brennstoffdurchgang (110) definiert, und der Schafteingriffsabschnitt (106) von dem Körper abhängt und eine Schaftkammer (114) definiert.

3. Treibstoffzufuhrsystem nach Anspruch 2, wobei die Schaftkammer (114) einen Schaftanschlag (118) beinhaltet, der eine im Allgemeinen horizontale Oberfläche definiert, die zum Eingriff mit einem oberen Ende (116) des Ventilschafts (64) ausgestaltet ist.

4. Treibstoffzufuhrsystem nach Anspruch 2, wobei der Kragen (96) vertikal vorsteht und bemessen ist, um eine Hin- und Herbewegung des Schafteingriffsabschnitts (106) gleitend aufzunehmen, und ausgestaltet ist, um den Ventilschaft (64) vor Bruch zu schützen.

5. Treibstoffzufuhrsystem nach Anspruch 1, wobei der Flansch (90) an dem Brennstoffzellenadapter eine Hauptöffnung (136) beinhaltet, in der der Kragen (96) aufgehängt ist, wobei der Kragen so bemessen ist, dass er einen Schafteingriffsabschnitt (106) des Schaftaufnahmeblocks (100) gleitend aufnimmt und den Schafteingriffsabschnitt führt, wenn er mit dem Ventilschaft (64) in Eingriff kommt.

6. Treibstoffzufuhrsystem nach Anspruch 5, wobei der Kragen (96) relativ zu dem Flansch (90) aufgehängt ist, sodass nur eine begrenzte vertikale Bewegung von 0,51 mm (0,020 Zoll) erlaubt ist, und eine nichtvertikale Bewegung des Kragens weiter eingeschränkt ist.

7. Treibstoffzufuhrsystem nach Anspruch 5, wobei der Kragen (96) relativ zu dem Flansch (90) durch eine Vielzahl von Armen (164) aufgehängt ist, die jeweils an einem Ende (172) mit dem Kragen und an einem gegenüberliegenden Ende (166) mit einem Ring (168) an dem Flansch verbunden sind, der die Hauptöffnung (136) definiert.

8. Treibstoffzufuhrsystem nach Anspruch 7, wobei die Vielzahl von Armen (164):
- vier Arme beinhaltet, die so konstruiert und angeordnet sind, dass sie den Kragen (96) im Allgemeinen umgeben, oder
- vier Arme beinhaltet, die an zwei Hauptstützpunkten (180, 182) an dem die Hauptöffnung (136) definierenden Ring (168) aufgehängt sind, oder
- jeweils einen Ringabschnitt (174), einen Mittelabschnitt (176) und einen Kragenabschnitt (178) beinhalten.

9. Treibstoffzufuhrsystem nach Anspruch 1, wobei der Schaftaufnahmeblock (100) aus Metall hergestellt ist.

10. Brennstoffzellenadapter (160) zur Verwendung mit einer Brennstoffzelle (60) in Verbindung mit einem Verbrennungseintreiber (10) mit einem Zylinderkopfrahmen, wobei der Adapter Folgendes aufweist:
einen im Allgemeinen planaren Flansch (90) und der eine Hauptöffnung (136) definiert;
einen Kragen (96), der zur Aufnahme eines hin- und hergehenden Ventilschafts (64) ausgestaltet ist;
**dadurch gekennzeichnet, dass** der Kragen (96) in der Öffnung (136) durch eine Aufhängung (162) aufgehängt ist, die mit dem Kragen und mit einem Ring (168) in dem Flansch (90) verbunden ist, der die Öffnung definiert,
die Aufhängung (162) eine Vielzahl von Stützarmen (164) beinhaltet, die jeweils an einem Ende (172) mit dem Kragen (96) und an einem gegenüberliegenden Ende (166) mit dem Ring (168) verbunden sind, sodass der Kragen (96) nur durch die Aufhängung (162) mit dem Flansch (90) verbunden ist.

11. Adapter nach Anspruch 10, bei dem jeder Arm (164) so konstruiert ist, dass er dem Kragen (96) nur einen begrenzten vertikalen Weg von 0,51 mm (0,020 Zoll) und eine noch eingeschränktere nichtvertikale Bewegung zulässt.

12. Adapter nach Anspruch 10, wobei die Vielzahl von Stützarmen (164) vier Arme beinhaltet, die jeweils im Allgemeinen "S"-förmig sind, wobei sie einen Mittelabschnitt (174) beinhalten, der im Allgemeinen bogenförmig ist und im Allgemeinen einer Krümmung eines Umfangs des Kragens (96) folgt.

13. Adapter nach Anspruch 12, wobei die Stützarme (164) Enden (166) haben, die an dem Ring (168) so befestigt sind, dass zwei Paare solcher Arme jeweils die Enden haben, die eng an dem Ring befestigt sind, sodass der Kragen (96) in der Öffnung (136) an zwei im Allgemeinen diametral gegenüberliegenden Stützpunkten (180, 182) aufgehängt ist.

## Revendications

1. Système d'alimentation en combustible construit et agencé pour une utilisation avec un dispositif d'entraînement de fixation par combustion (10) comprenant un cadre de culasse, une chambre de combustion (46) et un logement (12) définissant une chambre de pile à combustible (16), ledit système d'alimentation en combustible comprenant :
une pile à combustible (60) avec une enveloppe externe (68) ayant une extrémité inférieure fermée (92) et une extrémité supérieure ouverte (72) ;
une fermeture (70) sertie sur ladite extrémité supérieure (72) et définissant une ouverture (76) pour le logement d'une tige de soupape à mouvement alternatif (64) ;
un adaptateur de pile à combustible (160) s'engageant par frottement avec ladite fermeture (70) et comprenant une bride (90) configuré pour la suspension de ladite pile à combustible (60) dans la chambre de pile à combustible (16), ledit adaptateur (160) comprenant un collier (96) configuré pour la réception de ladite tige de soupape (64) ; et
un bloc récepteur de tige (100) pouvant être connecté au cadre de culasse et comprenant une partie d'engagement de tige (106) configurée pour s'engager directement et de manière étanche avec une extrémité de ladite tige de soupape (64), ladite partie d'engagement de tige (106) étant en communication fluidique avec un passage de récepteur interne (110) construit et agencé pour l'alimentation en carburant de la chambre de combustion (46),
**caractérisé en ce que** ledit collier (96) est suspendu pour un mouvement vertical restreint par rapport à ladite bride (90).

2. Système d'alimentation en carburant selon la revendication 1, dans lequel ledit bloc récepteur de tige (100) comprend un corps (108) définissant ledit passage de carburant interne (110), et ladite partie d'engagement de tige (106) dépend dudit corps et définit une chambre de tige (114).

3. Système d'alimentation en carburant selon la revendication 2, dans lequel ladite chambre de tige (114) comprend une butée de tige (118) définissant une surface généralement horizontale configurée pour s'engager avec une extrémité supérieure (116) de la tige de soupape (64).

4. Système d'alimentation en carburant selon la revendication 2, dans lequel ledit collier (96) fait saillie verticalement et est dimensionné pour la réception de manière coulissante d'un mouvement de va-et-vient de ladite partie d'engagement de tige (106) et est configuré pour la protection de ladite tige de soupape (64) contre une rupture.

5. Système d'alimentation en carburant selon la revendication 1, dans lequel ladite bride (90) sur ledit adaptateur de pile à combustible comprend une ouverture principale (136) dans laquelle ledit collier (96) est suspendu, ledit collier étant dimensionné pour la réception de manière coulissante d'une partie d'engagement de tige (106) dudit bloc récepteur de tige (100), et pour le guidage de ladite partie d'engagement de tige lorsqu'elle s'engage avec ladite tige de soupape (64).

6. Système d'alimentation en carburant selon la revendication 5, dans lequel ledit collier (96) est suspendu par rapport à ladite bride (90) de sorte que seul un mouvement vertical limité de 0,51 mm (0,020 pouce) est permis, et un mouvement non vertical dudit collier est en outre restreint.

7. Système d'alimentation en carburant selon la revendication 5, dans lequel ledit collier (96) est suspendu par rapport à ladite bride (90) par une pluralité de bras (164), chacun étant relié à une extrémité (172) audit collier et à une extrémité opposée (166) à un anneau (168) sur ladite bride définissant ladite ouverture principale (136).

8. Système d'alimentation en carburant selon la revendication 7, dans lequel ladite pluralité de bras (164) :
- comprend quatre bras construits et agencés pour entourer généralement ledit collier (96), ou
- comprend quatre bras suspendus à partir de deux points de support principaux (180, 182) sur ledit anneau (168) définissant ladite ouverture principale (136), ou
- comprend chacun une partie annulaire (174), une partie médiane (176) et une partie de collier (178).

9. Système d'alimentation en carburant selon la revendication 1, dans lequel ledit bloc récepteur de tige (100) est réalisé en métal.

10. Adaptateur de pile à combustible (160) destiné à être utilisé avec une pile à combustible (60) en conjonction avec un dispositif d'entraînement de fixation par combustion (10) ayant un cadre de culasse, ledit adaptateur comprenant :
une bride généralement plane (90) et définissant une ouverture principale (136) ;
un collier (96) configuré pour la réception d'une tige de soupape à mouvement alternatif (64)
**caractérisé en ce que** ledit collier (96) est suspendu dans ladite ouverture (136) par une suspension (162) reliée audit collier et à un anneau (168) dans ladite bride (90) définissant ladite ouverture,
ladite suspension (162) comprenant une pluralité de bras de support (164) chacun relié à une extrémité (172) audit collier (96) et à une extrémité opposée (166) audit anneau (168) de sorte que ledit collier (96) est relié à ladite bride (90) uniquement par ladite suspension (162)

11. Adaptateur selon la revendication 10, dans lequel chacun desdits bras (164) est construit pour ne permettre au collier (96) qu'un déplacement vertical limité de 0,51 mm (0,020 pouce), et un mouvement non vertical encore plus restreint.

12. Adaptateur selon la revendication 10, dans lequel ladite pluralité de bras de support (164) comprend quatre bras, chacun généralement en forme de « S », comprenant une partie médiane (174) généralement arquée et généralement suivant une courbe d'un périmètre dudit collier (96).

13. Adaptateur selon la revendication 12, dans lequel lesdits bras de support (164) ont des extrémités (166) fixées audit anneau (168) de sorte que deux paires de tels bras ont chacune lesdites extrémités fixées étroitement audit anneau, de sorte que ledit collier (96) est suspendu dans ladite ouverture (136) en deux points de support généralement diamétralement opposés (180, 182).
